Europäisches Patentamt

European Patent Office

Office européen des brevets

(11) Veröffentlichungsnummer: **0 264 661 B1**

(12) **EUROPÄISCHE PATENTSCHRIFT**

(45) Veröffentlichungstag der Patentschrift: 25.09.91

(51) Int. Cl.5: **F16C 17/22**

(21) Anmeldenummer: **87114090.1**

(22) Anmeldetag: **26.09.87**

(54) **Gleitlager mit Dehnungsausgleichselementen.**

(30) Priorität: **22.10.86 DE 3635837**

(43) Veröffentlichungstag der Anmeldung:
**27.04.88 Patentblatt 88/17**

(45) Bekanntmachung des Hinweises auf die
Patenterteilung:
**25.09.91 Patentblatt 91/39**

(84) Benannte Vertragsstaaten:
**AT BE ES FR**

(56) Entgegenhaltungen:
**DE-A- 3 435 821**
**DE-C- 923 759**
**DE-C- 1 068 516**
**US-A- 4 410 285**

**SOVIET INVENTIONS ILLUSTRATED, Sektionen P,Q, Woche 8629, 27. August 1986 DERWENT PUBLICATIONS LIMITED, London, Q 62 *SU-1 180 574 (METALLURG EQUIP CONSTR.)***

(73) Patentinhaber: **Fried. Krupp Gesellschaft mit
beschränkter Haftung
Altendorfer Strasse 103
W-4300 Essen 1(DE)**

(72) Erfinder: **Schraven, Gerhard
Birkmannsweg 62
W-4300 Essen 1(DE)**
Erfinder: **Hesse, Lothar
Wiesenstrase 17 b
W-4234 Alpen 1(DE)**
Erfinder: **Pfau, Richard
Raysebruch 5
W-4176 Sonsbeck(DE)**

(74) Vertreter: **Vomberg, Friedhelm, Dipl.-Phys.
Schulstrasse 8
W-5650 Solingen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Gleitlager mit einer Wellehülse aus verschleißfestem Material, die in einzelne Segmente unterteilt ist, durch Halteringe auf der Welle gehalten wird und mit zwischen den einzelnen Segmenten der Wellenhülse angeordneten Wärmedehnungsausgleichselementen.

Gleitlager kommen in vielen Gebieten des Maschinen- und Anlagenbaues, vor allem für schwierige Einsatzfälle, wie besonders hohe und stoßartige Belastungen, hohe Temperaturen, korrosive oder aggressive Medien sowie staub- und schmutzhaltiger Umgebung, zum Einsatz. Die Materialauswahl und -kombination erfolgt in erster Linie im Hinblick auf günstige Gleiteigenschaften und Lebensdauer. Beim Einsatz unter Staub- und Schmutzbedingungen steigt die Bedeutung der Verschleißfestigkeit. Dem vorzeitigen Verschleiß wird durch die Härtung des Wellenmaterials bzw. Auswahl sehr harter und verschleißfester Werkstoffe für die Lagerschalen entgegengewirkt; es werden darüber hinaus die Wellen mit Wellenhülsen aus hartem, verschleißfestem Material versehen, um einerseits den Verschleiß zu verringern und andererseits die Wellenhülsen austauschen zu können, um die Lebensdauer der Anlagen bzw. Maschinen zu erhöhen und die Wartungsund Reparaturkosten möglichst niedrig zu halten. Bei der Verwendung unterschiedlicher Werkstoffe für Welle und Wellenhülse ergeben sich jedoch Schwierigkeiten durch die unterschiedlichen Wärmedehnungskoeffizienten, die mit erhöhter Temperatur und Größe des Lagers zunehmen.

Aus der Notwendigkeit, die Instandhaltungskosten so gering wie möglich zu halten, wird versucht, zur Verschleißminderung Hartmetall einzusetzen, wo immer dies möglich und wirtschaftlich ist. Für den einwandfreien und sicheren Betrieb der Maschinen und Anlagen kommt es jedoch entscheidend auf einen einwandfreien und dauerhaften Kraftschluß zwischen Welle und Wellenhülse an.

Das eingangs genannte Gleitlager ist prinzipiell aus der DE-C-923 759 bekannt. Dort wird eine mit ihren Enden unverschieblich festgelegte, langgestreckte Schonbuchse für Wellen beschrieben, die in einzelne Abschnitte unterteilt ist und ein elastisches Glied zum Ausgleich von Wärmedehnungen aufweist, das in Form von Ringen zwischen die einzelnen Abschnitte eingesetzt ist. Allerdings sind diese Ringe nur bedingt geeignet, einen dauerhaften Kraftschluß zwischen der Welle und der Wellenhülse (Schonbuchse) zu gewährleisten.

Es ist Aufgabe der Erfindung, durch Kompensation der unterschiedlichen Längen- und Durchmesseränderungen von Welle und Lagerhülse den Kraftschluß unter allen während des Stillstandes, des Betriebes oder beim Reinigen auftretenden Temperaturen zu gewährleisten und ein Lockern der Wellenhülse zu vermeiden.

Diese Aufgabe wird durch die im Anspruch 1 angegebenen Merkmale gelöst, Weiterbildungen der Erfindung sind in den Unteransprüchen 2 und 3 beschrieben.

In dem erfindungsgemäßen Gleitlager wird ein Lockern der Wellenhülse bei ansteigender Temperatur sicher vermieden. Im Falle eines Gleitlagers für ein Turmrührwerk besteht die Welle aus Stahl, dessen Wärmedehnungskoeffizient im Bereich von 11,5 bis 12 $\mu$m/°C/m liegt. Aus Verschleiß- und Korrosionsgründen wurde für die Lagerschale und die Wellenhülse ein Wolframcarbid-Kobalt-Hartmetall mit 94 % WC und 6 % Co-Hilfsmetall für die Bindephase gewählt, dessen Wärmedehnungskoeffizient lediglich bei etwa 5,5 $\mu$m/°C/m liegt. Aufgrund dieser unterschiedlichen Wärmedehnung würde sich bei steigender Temperatur zwangsläufig eine Lockerung der Wellenhülse bis zur Funktionsuntüchtigkeit ergeben, auch wenn bei der Montage, d.h. bei Raumtemperatur, ein absolut einwandfreier, form- und kraftschlüssiger Verbund bestand.

Zur Vermeidung des bei Temperaturerhöhung auftretenden Spiels und des dadurch bedingten "Arbeitens" der Wellenhülse, was Verschleiß zur Folge hätte, sind jeweils zwischen den Kegelflächen der Wellenhülse und denen der Halteringe Wärmedehnungsausgleichsringe aus Memory-Metall vorgesehen. Diese sind so ausgelegt und dimensioniert, daß über sie im Einbauzustand, d.h. im Normalfall bei Raumtemperatur, der notwendige Form- und Kraftschluß zwischen Welle und Wellenhülse hergestellt wird. Das Memory-Metall ist so gewählt, daß die Umwandlungstemperatur über der Einbautemperatur liegt. Bei Erwärmung des Gleitlagers wird diese Umwandlungstemperatur überschritten und das Memory-Metall will in seine ursprüngliche Form vor der Umformung zurück. Dadurch wird eine zusätzliche Kraft erzeugt, die den Kraft- und Formschluß unter allen Betriebsbedingungen gewährleistet. Im Falle des Turmrührwerklagers liegt die Betriebstemperatur bei 70 °C, beim Reinigen werden jedoch Temperaturen bis ca. 140 °C erreicht. Der Umwandlungspunkt kann durch die Legierungszusammensetzung des Memory-Metalles je nach Erfordernis festgelegt werden. Die Aufgabe der Dehnungskompensation nach der Erfindung wird durch ein einmaliges Auslösen des Memory-Effektes erreicht. Dies kann entweder durch eine gezielte Maßnahme, d.h. einmalige Wärmezufuhr, erreicht werden oder beim Ein- bzw. Hochfahren der Anlage automatisch. Sollte sich je nach Lage dieses Punktes beim gelegentlichen Abschalten und Wiederanfahren der Anlage eine Unterschreitung der Umwandlungstemperatur ergeben, so ist darin keine Gefahr zu sehen, da der Memory-Effekt wiederholt ausgelöst werden kann.

Bei dem erfindungsgemäßen Aufbau des Gleitlagers ist eine längsgeschlitzte Wellenhülse vorgesehen, bei der sich durch die unterschiedlichen Materialien von Welle (Stahl) und Hülse (Hartmetall oder Keramik) bei Temperaturanstieg eine Verbreiterung der Spalte ergeben würde, was zu einer Lockerung der Wellenhülse führen müßte. Um auch bei erhöhten Temperaturen die Funktionstüchtigkeit des Gleitlagers zu gewährleisten, sind nach der Erfindung in dem Spalt bzw. in den Spalten Wärmedehnungsausgleichsleisten aus Memory-Metall vorgesehen, die in derselben Weise wie bei den Ringen für die Längsdehnung beschrieben, nach Überschreiten des Umwandlungspunktes ihre ursprüngliche Form wieder einnehmen wollen und dadurch eine gegenseitige Spannung der Wellenhülsensegmente durch eine in Umfangsrichtung der Welle wirkende Kraft bewirken.

Diese Wärmedehnungsausgleichsleisten sind vorteilhafterweise länger ausgeführt als die Wellenhülse und ragen in entsprechend ausgebildete Nuten in den Halteringen hinein, womit sie gleichzeitig als Verdrehsicherung für die Wellenhülse dienen.

Ein Ausführungsbeispiel des erfindungsgemäßen Gleitlagers mit Wärmedehnungsausgleichselementen ist in den Zeichnungen dargestellt und wird nachfolgend näher beschrieben. Es zeigen

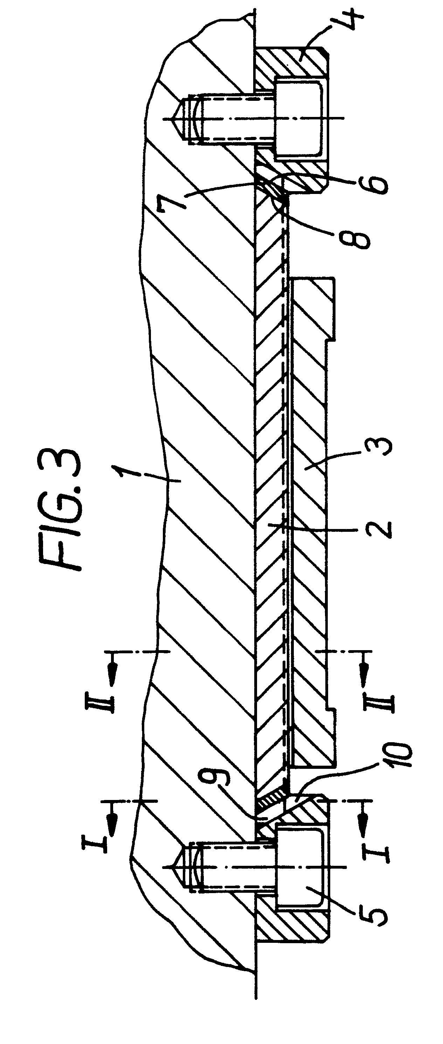

Fig, 1 einen Querschnitt durch die Welle und den Haltering an der Stelle I-I in Fig. 3,

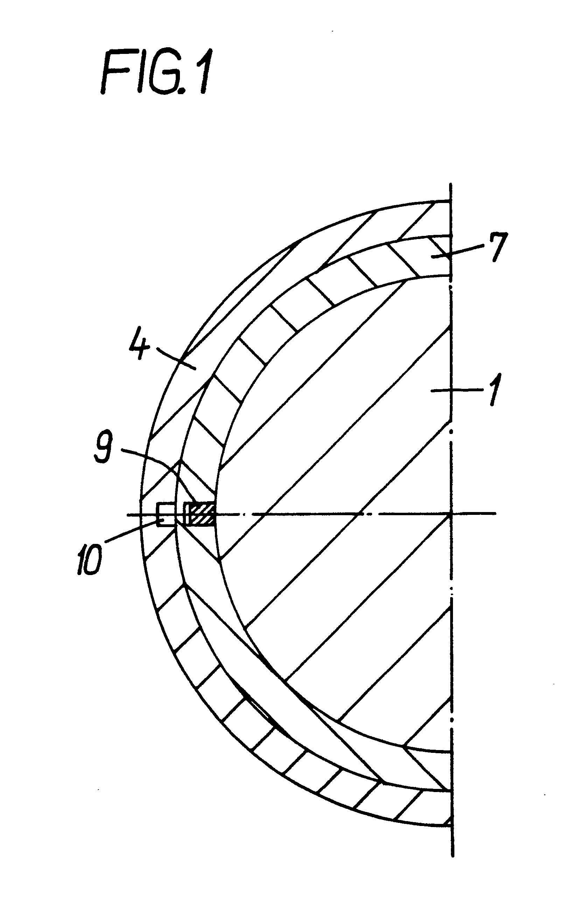

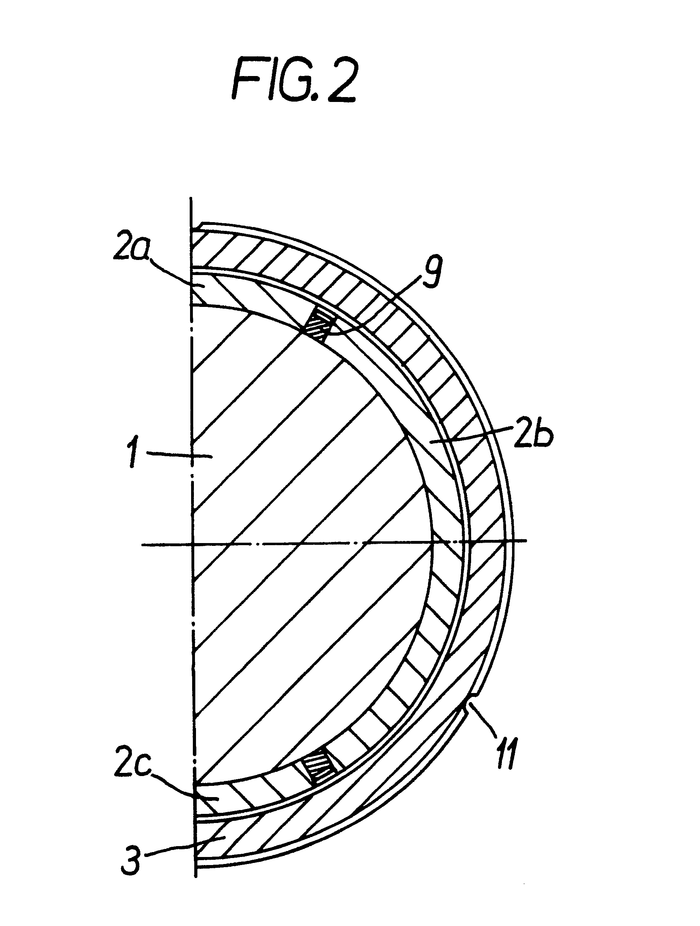

Fig. 2 einen Querschnitt durch die Welle, die Wellenhülse und die Lagerschale an der Stelle II-II in Fig. 3 und

Fig. 3 einen Teil-Längsschnitt durch die Welle, die Wellenhülse und die Lagerschale.

In den Figuren ist ein Gleitlager mit einer Welle 1, einer längsgeteilten Wellenhülse 2, die in diesem Falle aus drei gleich großen Segmenten 2a, b und c aufgebaut ist, dargestellt.

Je nach Gleitlagergröße und Einsatzbedingungen besteht die Wellenhülse jedoch aus zwei Halbschalen oder aus einer größeren Anzahl von Segmenten, wobei es durchaus vorteilhaft sein kann, Segmente in Umfangsrichtung unterschiedlich groß auszuführen, so daß sich für die Fugen eine unregelmäßige Winkelteilung ergibt. Die Segmente 2a, b und c werden im Ausführungsbeispiel von zwei Halteringen 4 auf der Welle gehalten. Die Halteringe sind durch auf dem Umfang gleichmäßig angeordnete Schrauben 5 befestigt. Die Kegelflächen 6 der Halteringe liegen auf entsprechenden Flächen der Wärmedehnungsausgleichsringe 7 auf, die ihrerseits aufliegen auf den Kegelflächen 8 der Wellenhülsensegmente. Hierdurch ist ein form- und kraftschlüssiger Verbund im Einbauzustand, d.h. bei Raumtemperatur, hergestellt. Als Material für die Wellenhülse 2 ist je nach Anwendungsfall und Umgebungsbedingungen Hartmetall bzw. Keramik vorgesehen.

Die Wärmedehnungsausgleichsringe 7 bestehen aus Memory-Metall, dessen Umwandlungspunkt zwischen Raumtemperatur und 400 °C, vorzugsweise zwischen 50 und 170 °C, liegt. Beim Überschreiten der Umwandlungstemperatur wird durch den Memory-Effekt, d.h. das Bestreben des Metalls, seine ursprüngliche Form bzw. Abmessung wieder einzunehmen, die Wellenhülse auch bei höheren Temperaturen sicher gehalten. Die Materialzusammensetzung und Dimensionierung der Wärmedehnungsausgleichsringe erfolgt in der Weise, daß die unterschiedliche Längendehnung zwischen Stahlwelle und Hartmetall- bzw. Keramik-Wellenhülse ausgeglichen wird und darüber hinaus nötigenfalls noch eine zusätzliche Spannkraft verbleibt, die die Wellenhülse unter allen Temperatur- und Lastbedingungen sicher in Wellenlängsrichtung fixiert.

Je nach Anwendungsfall kann es vorteilhaft sein, die Welle 1 auf der einen Seite des Lagers mit einer entsprechend ausgebildeten Schulter zu versehen und nur auf der gegenüberliegenden Seite des Lagers einen einzelnen Haltering 4 zu verwenden.

Zwischen den einzelnen Segmenten 2a, b und c sind nach der Erfindung Wärmedehnungsausgleichsleisten 9 aus Memory-Metall vorgesehen, die in vergleichbarer Weise, wie bei den Ringen 7 beschrieben, ein Spiel zwischen den Segmenten bei steigender Temperatur verhindern und oberhalb der Umwandlungstemperatur eine zusätzliche Tangentialkraft erzeugen. Durch diese beiden Wärmedehnungsausgleichselemente (Ringe und Leisten) wird ein unter allen Temperaturbedingungen spielfreier kraftschlüssiger Verbund hergestellt.

Die Wärmedehnungsausgleichsleisten 9 sind länger als die Wellenhülse und ragen mit ihren Enden durch die Wärmedehnungsausgleichsringe 7 hindurch in Nuten 10 in den Halteringen 4. Durch diesen Formschluß ist auch unter extremen Last- und Reibungsbedingungen ein Verdrehen der Wellenhülse 2 gegenüber der Welle 1 unmöglich.

Die Lagerschale 3 besteht ebenfalls je nach Einsatzfall aus Hartmetall oder Keramik. Sie ist in dem Gehäuseteil oder dem Lagerbock bzw. -flansch durch nicht dargestellte Elemente und durch am Umfang eingearbeitete halbkreisförmige Ausnehmungen 11 gegen Verdrehen gesichert.

## Patentansprüche

1. Gleitlager mit einer Wellenhülse (2) aus verschleißfestem Material, die in einzelne Segmente unterteilt ist, durch Halteringe (4) auf der Welle gehalten wird und mit zwischen den einzelnen Segmenten der Wellenhülse angeordneten Wärmedehnungsausgleichselementen (7, 9),

**dadurch gekennzeichnet,**

daß die Wellenhülse (2) entweder längsgeschlitzt oder unter Bildung zweier oder mehrerer Spalte in Längsrichtung geteilt ist und das sowohl zwischen den Enden der Wellenhülse (2) und den Halteringen (4) als auch in dem bzw. den Spalten in Längsrichtung Wärmedehnungsausgleichselemente (7, 9) aus Memory-Metall angeordnet sind, die ein Lockern der Wellenhülse (2) bei ansteigender Temperatur sicher vermeiden.

2. Gleitlager nach Anspruch 1, dadurch gekennzeichnet, daß als Materialpaarung Hartmetall/Hartmetall, Hartmetall/Keramik oder Keramik/Keramik für die Lagerschale (3) bzw. die Wellenhülse (2) vorgesehen ist.

3. Gleitlager nach einem der Ansprüche 1 oder 2, dadurch gekennzeichnet, daß die Umwandlungstemperatur des Memory-Metalls zwischen der Raumtemperatur und 400 °C liegen kann.

## Claims

1. Plane bearing with a shaft-bush (2) of wear-resistent material, said shaft-bush subdivided in separate segments and supported on the shaft by holding rings (4) and with thermal expansion-compensating elements (7, 9), characterized in that the shaft-bush (2) is either slitted longitudinally or divided in longitudinal direction thereby forming two or more splits and that thermal expansion-compensating elements (7, 9) of memory-metal are arranged both between the ends of the shaft-bush (2) and the holding-rings (4) and in the split, respectively the splits, in longitudinal direction, surely avoiding a loosening of the shaft-bush in the case of an increasing temperature.

2. Plane bearing as defined in claim 1, characterized in that as material-couple hard metal/hard metal, hard metal/ceramic or ceramic/ceramic is provided for the bearing brass (3).

3. Plane bearing as defined in one of the claims 1 or 2, characterized in that the transition-temperature of the memory-metal can be between the room temperature and 400 °C.

## Revendications

1. Palier lisse comportant une chemise d'arbre (2) en matériau résistant à l'usure, divisée en segments isolés, maintenue sur l'arbre par des bagues de maintien (4) et comportant entre les segments séparés de la chemise d'arbre, des organes de compensation de la dilatation thermique (7, 9),

caractérisé en ce que

la chemise d'arbre (2) est soit refendue longitudinalement, soit divisée en formant deux ou plusieurs fentes suivant la direction longitudinale, et en ce qu'aussi bien entre les extrémités de la chemise d'arbre (2) et les bagues de maintien (4) qu'également dans la ou les fentes orientées longitudinalement, sont placés des organes de compensation de la dilatation thermique (7, 9) en métal à mémoire, qui empêchent de façon sure, lorsque la température augmente, un relâchement de la chemise d'arbre (2).

2. Palier lisse suivant la revendication 1, caractérisé en ce que, comme association de métaux pour le coussinet de palier (3) et la chemise d'arbre (2), il est prévu métal dur/métal dur, métal dur/céramique ou céramique/céramique

3. Palier lisse suivant la revendication 1 ou la revendication 2, caractérisé en ce que la température de transformation du métal à mémoire peut être située entre la température ambiante et 400 °C.

# FIG.1

## FIG. 2

## FIG.3

EP 0 264 661 B1